# EUROPEAN PATENT APPLICATION

(11) **EP 2 930 483 A1**
(43) Date of publication of application: **14.10.2015**
(21) Application number: 15162546.4
(22) Date of filing: 07.04.2015
(51) Int. Cl.: G01J 5/00, G01J 1/42, G01J 5/06

(54) **FLAME DETECTING SYSTEM**

(30) Priority: 08.04.2014 JP 2014079534
(71) Applicant: Azbil Corporation, Chiyoda-ku Tokyo 100-6419 (JP)
(72) Inventor: Mori, Raita, Tokyo 100-6419 (JP)
(74) Representative: Tischner, Oliver

(57) **Abstract**

A flame detecting system includes: a flame detecting sensor that detects light and has a sensitivity parameter that is measured in advance; a voltage generating portion that generates a driving voltage for the flame detecting sensor; a signal generating portion that generates a flame signal expressing a magnitude of the light detected by the flame detecting sensor; and a parameter relaying portion that acquires a sensitivity parameter of the flame detecting sensor and corrects an operation of the voltage generating portion and/or the signal generating portion so that the flame signal will be identical when there is an identical flame, based on the sensitivity parameter.

## Description

### FIELD OF TECHNOLOGY

The present invention relates to a flame detecting system for correcting sensitivity when a flame detecting sensor has been replaced.

### BACKGROUND

Conventionally in combusting devices such as boilers, flame detection systems have been used for purposes of such as detecting whether or not a flame has been produced properly within the furnace. Moreover, there are cases wherein the flame detecting sensor is used as a sensor in a flame detecting system. The flame detecting system, based on a detection signal that is outputted by the flame detecting sensor detecting light that is produced primarily from the flame, outputs a flame signal indicating the magnitude of the light, or an evaluation results indicating whether or not there is a flame. See, for example, Japanese Unexamined Patent Application Publication 2011-214893.

This flame detecting system is a product with a limited service life, and thus requires replacement upon occasion. On the other hand, there is variability in sensitivity between individual flame detecting sensors. Because of this, there is a problem in that when a flame detecting sensor is replaced in the field, the output may vary even given an identical flame.

This invention was created in order to solve the issue as described above, and an aspect thereof is to provide a flame detecting system able to output an identical detection result for an identical flame even if the flame detecting sensor has been replaced.

### SUMMARY

A flame detecting system according to the present invention includes: a flame detecting sensor that detects light and has a sensitivity parameter that is measured in advance; a voltage generating portion that generates a driving voltage for the flame detecting sensor; a signal generating portion that generates a flame signal expressing a magnitude of the light detected by the flame detecting sensor; and a parameter relaying portion that acquires a sensitivity parameter of the flame detecting sensor and corrects an operation of the voltage generating portion and/or the signal generating portion so that the flame signal becomes identical when there is an identical flame, based on the sensitivity parameter.

The present invention, structured as described above, enables outputting of identical detection results for identical flames even if the flame detecting sensor has been replaced.

### BRIEF DESCRIPTIONS OF THE DRAWINGS

FIG. 1 is a diagram illustrating a structure of a flame detecting system according to Example according to the present invention.
FIG. 2 is a flowchart illustrating a sensor sensitivity correcting method for a case wherein a flame detecting sensor has been replaced in a flame detecting system according to the Example according to the present invention.
FIG. 3 is a diagram illustrating a structure of a flame detecting system according to Another Example according to the present invention.
FIG. 4 is a flowchart illustrating a sensor sensitivity correcting method for a case wherein a flame detecting sensor has been replaced in a flame detecting system according to the Another Example according to the present invention.

### DETAILED DESCRIPTION

Examples according to the present disclosure will be explained in detail below referencing the figures.

### Example

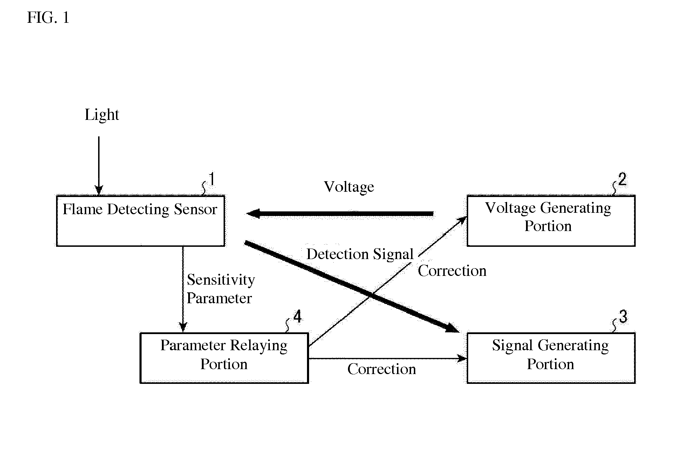

FIG. 1 is a diagram illustrating a structure of a flame detecting system according to Example according to the present invention.

The flame detecting system, as illustrated in FIG. 1, is structured from a flame detecting sensor 1, a voltage generating portion 2, a signal generating portion 3, and a parameter relaying portion 4.

The flame detecting sensor 1 is that which detects light. The detection result (a detection signal) by the flame detecting sensor 1 is outputted to a signal generating portion 3. Moreover, the flame detecting sensor 1 has been given a sensitivity parameter, that indicates its own sensitivity, in advance (through, for example, a measurement of the sensitivity parameter at the time at which the flame detecting sensor 1 was manufactured in the factory). This flame detecting sensor 1 may be, for example, an ultraviolet photoelectron tube (a UV tube). In this UV tube, when ultraviolet radiation strikes a photosensitive surface of an electrode of the photoelectron tube, a photoelectron is produced through the photoelectric effect, causing a discharge current to flow through the flow of the electrons, to thereby detect the flame.

The voltage generating portion 2 is that which generates a driving voltage for the flame detecting sensor 1.

The signal generating portion 3 is that which generates a flame signal indicating the magnitude of the light detected by the flame detecting sensor 1, based on the detection result (detection signal) by the flame detecting sensor 1. Moreover, this signal generating portion 3 may have a function for evaluating, from the flame signal, whether or not there is a flame. The flame signal and/or a signal indicating the evaluation result as to whether or not there is a flame, generated by the signal generating portion 3, is outputted to the outside.

The parameter relaying portion 4 is that which acquires the sensitivity parameter of the flame detecting sensor 1, and, based on this sensitivity parameter, corrects the operation of the voltage generating portion 2 and/or the signal generating portion 3 so that the flame signal will be identical if there is an identical flame. Note that in FIG. 1, a case is shown wherein the operations of the voltage generating portion 2 and the signal generating portion 3 are corrected.

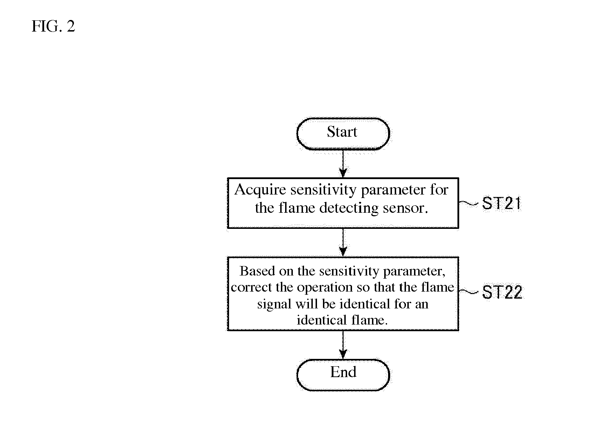

The method for correcting the sensor sensitivity when the flame detecting sensor 1 is replaced in the flame detecting system structured as described above will be explained next in reference to FIG. 2.

When the flame detecting sensor 1 is replaced, first the parameter relaying portion 4 acquires the sensitivity parameter of the flame detecting sensor 1 (Step ST21: Parameter Acquiring Step).

Following this, the parameter relaying portion 4 corrects the operation of the voltage generating portion 2 and/or the signal generating portion 3 so that the flame signal will be identical if there is an identical flame, based on the sensitivity parameter that has been acquired (Step ST22: Correcting Step). This enables outputting of an identical detection result for an identical flame, through enabling sensitivity correction, even when the flame detecting sensor 1, which has unit-to-unit variability in sensitivity, has been replaced.

Specific examples of flame detecting systems according to the present invention will be presented next.

As a specific example of the present invention, there is a flame detecting system which uses a UV tube, wrapped in paper printed with the sensitivity parameter, as the flame detecting sensor 1, where a ten key, through which the sensitivity parameter can be inputted, is used as the parameter relaying portion 4, and a relay that is able to correct a threshold value based on the sensitivity parameter is used as the signal generating portion 3.

Given this, when the flame detecting sensor 1 is replaced, first an operator references the paper upon which the sensitivity parameter is printed, the paper being wrapped around the UV tube that is the replacement. Following this, the sensitivity parameter is inputted through the ten key.

Note that the method for relaying the sensitivity parameter to the parameter relaying portion 4 is not limited to that of the method set forth above, but may be a method such as, for example, using a non-contact IC, using a barcode, using a two-dimensional barcode, or inputting a sensitivity parameter, printed on paper using a variable resistance that can be operated from the outside.

Moreover, when correcting the driving voltage of the flame detecting sensor 1 in the voltage generating portion 2, the method may be one that corrects the voltage downward when the sensitivity of the flame detecting sensor 1 is high, or correcting the voltage upward if it is low, or a method for shortening the time over which the voltage is applied if the sensitivity of the flame detecting sensor 1 is high, or lengthening the time over which the voltage is applied if it is low.

As described above, given this Example, the structure is such that the sensitivity parameter of the flame detecting sensor 1 is acquired and the operation of the voltage generating portion 2 and/or the signal generating portion 3 is corrected so that the detection result will be identical if there is an identical flame, thus enabling an identical detection result to be outputted for an identical flame even if the flame detecting sensor 1 has been replaced.

### Another Example

In Another Example a case is presented wherein temperature characteristics are included in the sensitivity parameters for the flame detecting sensor 1, to take into account temperature characteristics as well in correcting the operations.

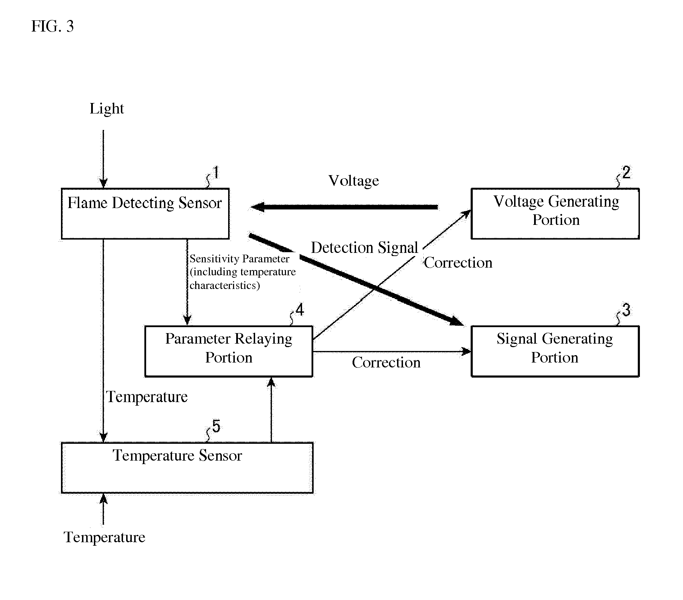

FIG. 3 is a diagram illustrating a structure of a flame detecting system according to the Another Example according to the present invention. The flame detecting system according to the Another Example, illustrated in FIG. 3, has a temperature sensor 5 that is added to the flame detecting system according to the Example, illustrated in FIG. 1. The other structures are the same, so identical codes are assigned and explanations thereof are omitted.

The temperature sensor 5 measures the temperature in the environment in which the flame detecting sensor 1 is installed. The measurement result by the temperature sensor 5 is outputted to the parameter relaying portion 4.

Given this, the parameter relaying portion 4 corrects the operation of the voltage generating portion 2 and/or the signal generating portion 3 so that the flame signal will be identical if there is an identical flame, based on the sensitivity parameter that has been acquired and on the temperature that has been measured by the temperature sensor 5.

Note that while FIG. 3 shows a case wherein the temperature sensor 5 is installed separately from the flame detecting sensor 1, it may instead be incorporated within the flame detecting sensor 1.

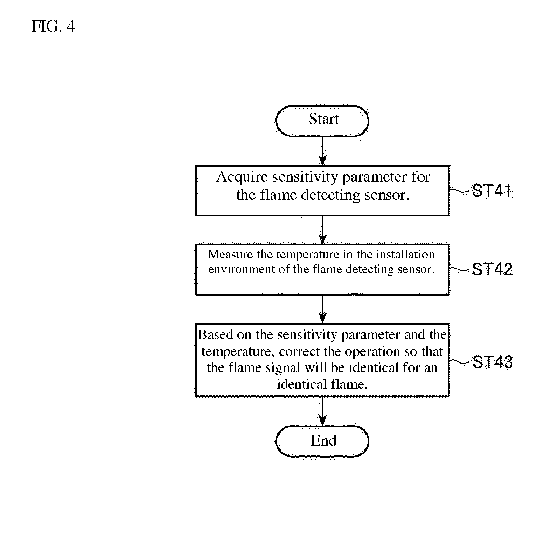

The method for correcting the sensor sensitivity when the flame detecting sensor 1 is replaced in the flame detecting system structured as described above will be explained next in reference to FIG. 4.

When the flame detecting sensor 1 is replaced, first the parameter relaying portion 4 acquires the sensitivity parameter of the flame detecting sensor 1 (Step ST41: Parameter Acquiring Step).

Moreover, the temperature sensor 5 measures the temperature in the environment in which the flame detecting sensor 1 is installed (Step ST42: Temperature measuring step). Here the temperature that is measured by the temperature sensor 5 may be that which indicates the temperature of the flame detecting sensor 1 main unit. For example, it may be the ambient temperature around the flame detecting sensor 1, or it may be temperature information that enables the derivation of information on the temperature that effects the operation of the flame detecting sensor 1. A signal indicating the measurement result by the temperature sensor 5 is outputted to the parameter relaying portion 4.

Following this, the parameter relaying portion 4 corrects the operation of the voltage generating portion 2 and/or the signal generating portion 3 so that the flame signal will be identical if there is an identical flame, based on the sensitivity parameter that has been acquired and on the temperature that has been measured by the temperature sensor 5 (Step ST43: Correcting step). This enables outputting of an identical detection result for an identical flame, through enabling sensitivity correction, even when the flame detecting sensor 1, which has unit-to-unit variability in sensitivity, has been replaced.

In this way, in addition to the effects in the Example, this enables outputting of an identical detection result for an identical flame on a plurality of work areas having different temperature environments, by taking into account the temperature characteristics of the flame detecting sensor 1 in the sensor sensitivity correction when a flame detecting sensor 1 has been replaced.

Note that the various examples set forth above can be combined freely within the scope of the invention, or any given structural element within any of the examples may be modified or any given structural element may be omitted in any of the examples, within the scope of the present disclosure.

### List of Reference signs

1: Flame Detecting Sensor
2: Voltage Generating Portion
3: Signal Generating Portion
4: Parameter Relaying Portion
5: Temperature Sensor

## Claims

1. A flame detecting system comprising:
a flame detecting sensor (1) adapted to detect light, the flame detecting sensor (1) having a sensitivity parameter that is measured in advance;
a voltage generating portion (2) adapted to generate a driving voltage for the flame detecting sensor (1);
a signal generating portion (3) adapted to generate a flame signal expressing a magnitude of the light detected by the flame detecting sensor (1); and
a parameter relaying portion (4) adapted to acquire a sensitivity parameter of the flame detecting sensor (1) and to correct an operation of the voltage generating portion (2) and/or the signal generating portion (3) so that the flame signal becomes identical when there is an identical flame, based on the sensitivity parameter.

2. The flame detecting system as set forth in Claim 1, further comprising:
a temperature sensor (5) adapted to measure a temperature in the installation environment for the flame detecting system; wherein
a temperature characteristic is included in the sensitivity parameter; and
the parameter relaying portion (4) is adapted to correct an operation of the voltage generating portion (2) and/or the signal generating portion (3) so that the flame signal becomes identical when there is an identical flame, based on the sensitivity parameter and the temperature measured by the temperature sensor (5).

3. The flame detecting system as set forth in Claim 1 or 2, wherein:
the signal generating portion (3) is adapted to evaluate, from the flame signal, whether or not there is a flame.
